# EUROPEAN PATENT APPLICATION

(11) **EP 4 142 081 A1**
(43) Date of publication of application: **01.03.2023**
(21) Application number: 21217668.9
(22) Date of filing: 24.12.2021
(51) Int. Cl.: H02G 15/013, F04B 17/03, E03B 9/20, A01K 7/02, H02G 9/12, F04D 13/06, A01K 39/02, H02G 9/00, H02G 3/22

(54) **CABLE CLAMP DEVICE SUITABLE FOR UNDERWATER USE AND PET WATER DISPENSER**

(30) Priority: 27.08.2021 CN 202110994658
(71) Applicant: Xie, Canhui, Chaozhou, Guangdong 521021 (CN)
(72) Inventor: LIU, Shiping, Chaozhou (CN)
(74) Representative: Sun, Yiming

(57) **Abstract**

A cable clip device, including outer cylindrical column, first inner cylindrical column relatively fixed to outer cylindrical column, second inner cylindrical column provided with a sliding groove, spring and cover; the second inner cylindrical column vertically and telescopically slides with respect to the first inner cylindrical column; the first and second inner cylindrical columns are connected with a pull rod; a hook portion on a top of the pull rod can slide in the sliding groove which has first and second positioning points and includes unidirectional first and second tracks connecting the first and the second positioning points; a middle of the cover is provided with a cable clip for clamping cable; a plug connector can pass through the first and second inner cylindrical columns; an outer periphery of the cover is provided with a sealing ring; the cover is detachably arranged above the second inner cylindrical column.

## Description

### TECHNICAL FIELD

This application relates to a cable clip device, in particular to a cable clip device suitable for underwater use and a pet water dispenser.

### BACKGROUND

There are lots of electrical appliances that need to work underwater, while the plug connectors connecting the electrical appliances need to be led out to the outside to connect to the power source. Therefore, the power cable either extends from the top of the water tank or passes through the wall of the water tank to the outside. The power cable protruding from the top of the water tank seriously affects the appearance. It is necessary to consider the disassembly and sealing of the power cable when the power cable passes through the wall of the water tank and extends to the outside. The prior art cannot simultaneously solve the problems of convenient disassembly and reliable sealing of the power cable.

### SUMMARY

It is necessary to provide a cable clip device suitable for underwater use and a pet water dispenser, which can facilitate the disassembly of the power cable and meet the sealing requirements.

The present disclosure provides a cable clip device suitable for underwater use, for clamping a cable of an electrical appliance, one end of the cable is connected with a plug connector, wherein the cable clip device includes an outer cylindrical column, a first inner cylindrical column, a second inner cylindrical column, a spring and a cover; the first inner cylindrical column and the outer cylindrical column are relatively fixed; the second inner cylindrical column vertically and telescopically slides with respect to the first inner cylindrical column; the spring provides an elastic force for the second inner cylindrical column to slide obliquely upwards; the second inner cylindrical column is provided with a sliding groove; the first inner cylindrical column and the second inner cylindrical column are connected with a pull rod arranged therebetween; a hook portion on a top of the pull rod is able to slide in the sliding groove; the sliding groove has a first positioning point and a second positioning point; the first positioning point is located below the second positioning point; the sliding groove includes a first track and a second track connecting the first positioning point and the second positioning point; the first track and the second track are both unidirectional tracks; the hook portion is able to move from the first positioning point to the second positioning point through the first track; the hook portion is able to move from the second positioning point to the first positioning point through the second track; a middle of the cover is provided with a cable clip for clamping the cable; and the plug connector is able to pass through the first inner cylindrical column and the second inner cylindrical column; an outer periphery of the cover is provided with a sealing ring; the cover is detachably arranged above the second inner cylindrical column; when the hook portion is at the second positioning point, the sealing ring abuts against and seals an inner surface of the outer cylindrical column; and when the hook portion is at the first positioning point, an abutting and sealing state between the sealing ring and the inner surface of the outer cylindrical column is released.

Preferably, the first track includes a first sub-track and a second sub-track connected to the first sub-track; the first sub-track and the second sub-track only allow the hook portion to move toward the second positioning point; the first sub-track is an obliquely upward track, the second sub-track is an obliquely downward track; the second track includes a three sub-track and a fourth sub-track connected to the third sub-track; the third sub-track and the fourth sub-track only allow the hook portion to move toward the first positioning point; a lower end of the first sub-track is connected to a lower end of the fourth sub-track, and a lower end of the second sub-track is connected to a lower end of the third sub-track.

Preferably, a depth of an upper end of the second sub-track is smaller than a depth of an upper end of the first sub-track; and a depth of a lower end of the third sub-track is smaller than a depth of a lower end of the second sub-track; a depth of an upper end of the fourth sub-track is smaller than a depth of an upper end of the third sub-track; and a depth of a lower end of the first sub-track is smaller than a depth of a lower end of the fourth sub-track.

The present disclosure further provides a pet water dispenser capable of quickly replacing a water pump, the pet water dispenser includes the cable clip device, the pet water dispenser further includes a water tank, a water pump and a water outlet column; wherein the water pump is the electrical appliance; the water pump is connected to the water outlet column in a plug-in manner; the water pump is detachably installed in the water tank; the cable clip device is installed in the water tank.

Preferably, the water outlet column is vertically arranged and a water outlet of the water outlet column gradually expands outward to form a bell-shaped opening; a top of the water tank is provided with a water leakage pan; the water leakage pan has a plurality of water leakage holes; a water receiving tray is provided below the water leakage pan; the water outlet column passes through the water receiving tray; a water leakage opening is formed between the water receiving tray and the water outlet column; and an upper surface of the water receiving tray is a diversion surface with a recess in middle.

Preferably, a bracket is also provided between the water receiving tray and the water leakage pan; the bracket is formed with a receiving cavity; a filter cotton and a filter activated carbon are sequentially provided in the receiving cavity from top to bottom.

Preferably, the bracket is a light guide bracket; the light guide bracket includes a ring supported on the top of the water tank; the ring is exposed; and an LED light is provided on a periphery of the water tray; a light emitted by the LED light is able to pass through the light guide bracket.

In the cable clip device suitable for underwater use provided by the present disclosure, the power cable is set in the cable clip, and the power cable and the cable clip can be sealed. When the hook portion is at the second positioning point, the sealing ring abuts against and seals an inner surface of the outer cylindrical column, the cover cannot be disassembled from the second inner cylindrical column, and the water in the water tank cannot penetrate from the outer cylindrical column to the outside. When the power cable needs to be disassembled, the cover is pressed, and the second inner cylindrical column is pressed by the cover, then the second inner cylindrical column will compress the spring. In the process of the second inner cylindrical column sliding obliquely downwards, the hook portion leaves the second positioning point; under the action of the spring, the second inner cylindrical column rises, and the hook portion will move along the second track to the first positioning point. At this time, the abutting and sealing state between the sealing ring and the inner surface of the outer cylindrical column is released; and the cover protrudes from the top of the outer cylindrical column; then the cover can be disassembled from the second inner cylindrical column, and the power cable can be taken out. When the power cable needs to be reinstalled, the cover is pressed so that the cover presses the second inner cylindrical column, the hook portion leaves the first positioning point, the hook portion is returned to the second positioning point through the first rail, and the sealing ring abuts against and seals the inner surface of the outer cylindrical column.

### BRIEF DESCRIPTION OF THE DRAWINGS

FIG. 1 is a schematic structural diagram of a pet water dispenser according to a specific embodiment of the present disclosure.
FIG. 2 is a cross-sectional view of the pet water dispenser according to the specific embodiment of the present disclosure.
FIG. 3 is a cross-sectional view of a cable clip device according to a specific embodiment of the present disclosure.
FIG. 4 is a schematic diagram of an external structure of the cable clip device according to a specific embodiment of the present disclosure after an outer cylindrical column and a spring are hidden.

### DETAILED DESCRIPTION OF PREFERRED EMBODIMENTS

The technical solutions in the embodiments of the present disclosure will be clearly and completely described below in conjunction with the accompanying drawings in the embodiments of the present disclosure. Obviously, the described embodiments are only a part of the embodiments of the present disclosure, rather than all the embodiments.

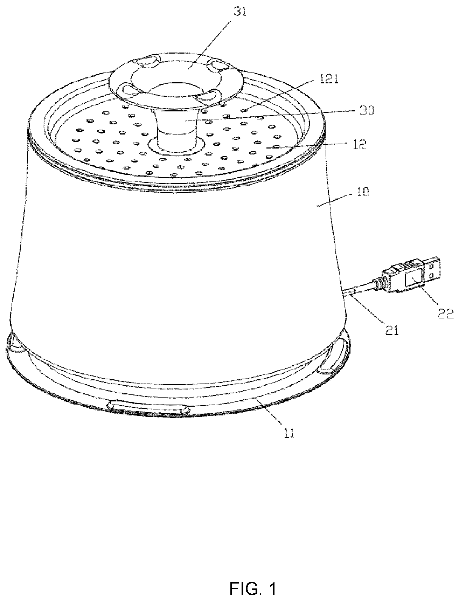

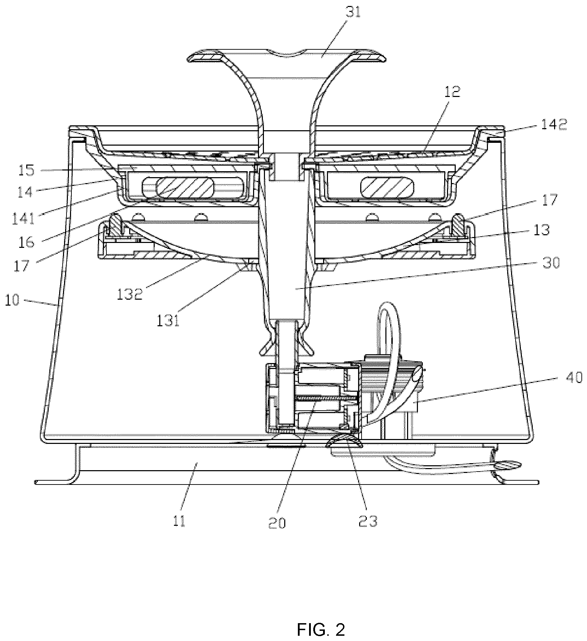

As shown in FIGS. 1 and 2, the present disclosure provides a pet water dispenser capable of quickly replacing a water pump. The pet water dispenser includes a water tank 10, a water pump 20, a water outlet column 30, and a cable clip device 40. The water pump 20 is connected to the water outlet column 30 in a plug-in manner; the water pump 20 is detachably installed in the water tank 10; the cable clip device 40 can be installed vertically in the water tank 10; and the cable clip device 40 can be installed below the water surface. The cable clip device 40 is configured to clamp a power cable 21 of the water pump 20; and one end of the power cable 21 is connected with a plug connector 22.

More specifically, a receiving base 11 is provided under the water tank 10, and the power cable 21 passing through the cable clip device 40 is hidden in the receiving base 11. Wherein, the water pump 20 can be fixed in the water tank 10 by a suction cup 23.

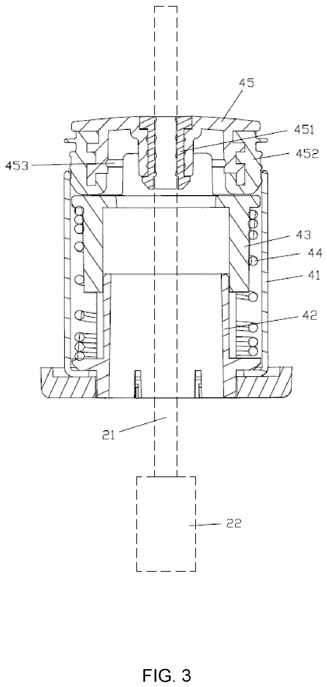

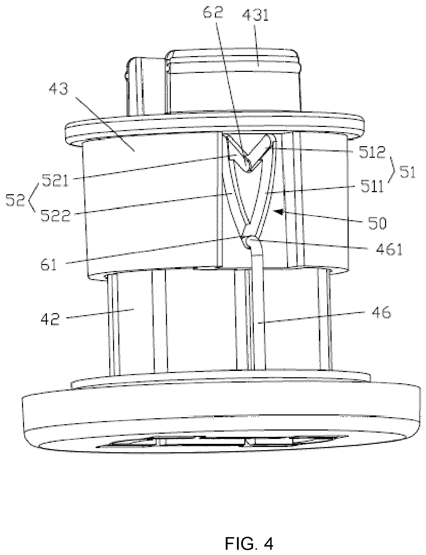

In this embodiment, as shown in FIGS. 3 and 4, the cable clip device 40 includes an outer cylindrical column 41, a first inner cylindrical column 42, a second inner cylindrical column 43, a spring 44, and a cover 45. The first inner cylindrical column 42 and the outer cylindrical column 41 are relatively fixed; the second inner cylindrical column 43 vertically and telescopically slides with respect to the first inner cylindrical column 42; and the spring 44 provides an elastic force for the second inner cylindrical column 43 to slide obliquely upwards; the second inner cylindrical column 43 is provided with a sliding groove 50; the first inner cylindrical column 42 and the second inner cylindrical column 43 are connected with a pull rod 46 arranged therebetween; a hook portion 461 on a top of the pull rod 46 can slide in the sliding groove 50; the sliding groove 50 has a first positioning point 61 and a second positioning point 62; the first positioning point 61 is located below the second positioning point 62. The sliding groove 50 includes a first track 51 and a second track 52 connecting the first positioning point 61 and the second positioning point 62; and the first track 51 and the second track 52 are both unidirectional tracks. The hook portion 461 can move from the first positioning point 61 to the second positioning point 62 through the first track 51; and the hook portion 461 can move from the second positioning point 62 to the first positioning point 61 through the second track 52. A middle of the cover 45 is provided with a cable clip for clamping the power cable 21; and the plug connector 22 can pass through the first inner cylindrical column 42 and the second inner cylindrical column 43; an outer periphery of the cover 45 is provided with a sealing ring 452; the cover 45 is detachably arranged above the second inner cylindrical column 43. When the hook portion 461 is at the second positioning point 62, the sealing ring 452 abuts against and seals an inner surface of the outer cylindrical column 41; and when the hook portion 461 is at the first positioning point 61, an abutting and sealing state between the sealing ring 452 and the inner surface of the outer cylindrical column 41 is released.

Wherein, the second inner cylindrical column 43 may be formed with a protrusion 431 in a radial direction; and the cover 45 is formed with a positioning groove 453. When the sealing ring 452 abuts against and seals the inner surface of the outer cylindrical column 41, the protrusion 431 fits the positioning groove 453, so that the cover 45 cannot be pulled out vertically from the top of the outer cylindrical column 41. When the abutting and sealing state between the sealing ring 452 and the inner surface of the outer cylindrical column 41 is released, the protrusion 431 can leave the positioning groove 453 so that the cover 45 can be disassembled.

When the power cable 21 is set in the cable clip, the power cable 21 and the cable clip are sealed. When the hook portion 461 is at the second positioning point 62, the spring 44 is compressed, and the sealing ring 452 abuts against and seals the inner surface of the outer cylindrical column 41, the cover 45 cannot be disassembled from the second inner cylindrical column 43, water in the water tank 10 cannot penetrate from the outer cylindrical column 41 to the outside. When the power cable 21 needs to be disassembled, the cover 45 is pressed, and the second inner cylindrical column 43 is pressed by the cover 45, then the second inner cylindrical column 43 will compress the spring 44. In the process of the second inner cylindrical column 43 sliding obliquely downwards, the hook portion 461 leaves the second positioning point 62, under the action of the spring 44, the second inner cylindrical column 43 rises, and the hook portion 461 will move along the second track 52 to the first positioning point 61. At this time, the abutting and sealing state between the sealing ring 452 and the inner surface of the outer cylindrical column 41 is released; and the cover 45 protrudes from the top of the outer cylindrical column 41; the cover 45 can be disassembled from the second inner cylindrical column 43, and the power cable 21 can be taken out. When the power cable 21 needs to be reinstalled, the cover 45 is pressed so that the cover 45 squeezes the second inner cylindrical column 43, the hook portion 461 leaves the first positioning point 61, the hook portion 461 is returned to the second positioning point 62 through the first rail 51, and the sealing ring 452 abuts against and seals an inner surface of the outer cylindrical column 41.

More specifically, the first track 51 includes a first sub-track 511 and a second sub-track 512 connected to the first sub-track 511; and the first sub-track 511 and the second sub-track 512 only allow the hook portion 461 to move toward the second positioning point 62. The first sub-track 511 is an obliquely upward track, the second sub-track 512 is an obliquely downward track; and the second track 52 includes a three sub-track 521 and a fourth sub-track 522 connected to the third sub-track 521. The third sub-track 521 and the fourth sub-track 522 only allow the hook portion 461 to move toward the first positioning point 61. A lower end of the first sub-track 511 is connected to a lower end of the fourth sub-track 522, and a lower end of the second sub-track 512 is connected to a lower end of the third sub-track 521.

Shapes of the first rail 51 and the second rail 52 may be symmetrically arranged. When the hook portion 461 is at the first positioning point 61, the cover 45 is pressed, and the hook portion 461 will enter the second sub-track 512 along the first sub-track 511; the cover 45 is then immediately released, under the action of the spring 44, the hook portion 461 will directly move to the second positioning point 62 along the second sub-track 512; and then the cover 45 is pressed again, the hook portion 461 will enter the fourth sub-track 522 along the third sub-track 521, and under the action of the spring 44, the hook portion 461 will directly go back to the first positioning point 61 along the fourth sub-track 522, and so on.

More specifically, a depth of the upper end of the second sub-track 512 is smaller than that of an upper end of the first sub-track 511; and a depth of a lower end of the third sub-track 521 is smaller than that of a lower end of the second sub-track 512; a depth of an upper end of the fourth sub-track 522 is smaller than that of an upper end of the third sub-track 521; and a depth of a lower end of the first sub-track 511 is smaller than that of a lower end of the fourth sub-track 522. After the hook portion 461 slides along the first sub-track 511, the hook portion 461 will fall into the second sub-track 512, and a blocking surface is formed between the upper end of the second sub-track 512 and the upper end of the first sub-track 512 to prevent the hook portion 461 from going backwards from the second sub-track 512 into the first sub-track 511. Similarly, in the moving process of the hook portion 461, it is only possible to sequentially move from the first sub-track 511 to the second sub-track 512, then to the third sub-track 521, then to the fourth sub-track 522, and then back to the first sub-track 511.

In the present disclosure, as shown in FIGS. 1 and 2, the water outlet column 30 is vertically arranged and the water outlet of the water outlet column 30 gradually expands outward to form a bell-shaped opening 31. The top of the water tank 10 is provided with a water leakage pan 12. The water leakage pan 12 has a plurality of water leakage holes 121. A water receiving tray 13 is provided below the water leakage pan 12. The water outlet column 30 passes through the water receiving tray 13. A water leakage opening 131 is formed between the water receiving tray 13 and the water outlet column 30, and the upper surface of the water receiving tray 13 is a diversion surface 132 with a recess in the middle. The water flowing out of the water outlet column 30 will spread through the bell-shape opening 31 and fall onto the water leakage pan 12. The arrangement of the water leakage opening 131 on the water leakage pan 12 not only facilitates the water to fall, but also to reduce the sprinkling of the water. The water leaking from the water leakage pan 12 will fall onto the water receiving tray 13. Since the upper surface of the water receiving tray 13 is a diversion surface 132 with a concave in the middle, it is convenient for collection of water. During the process of the water flowing down from the water leakage opening 131, the water outlet column 30 plays a guiding role, and water droplets will not directly fall to the water surface, which can reduce noise. Through the above means, the water can be continuously collected repeatedly.

A bracket 14 is also provided between the water receiving tray 13 and the water leakage pan 12, and the bracket 14 is formed with a receiving cavity 141. A filter cotton 15 and a filter activated carbon 16 are sequentially provided in the receiving cavity 141 from top to bottom. The filter cotton 15 and the filter activated carbon 16 can filter most of the impurities left when pets drink water, improve the cleanliness of the water source, and ensure a safe drinking water of pets.

The bracket 14 is a light guide bracket 14. The light guide bracket 14 includes a ring 142 supported on the top of the water tank 10, the ring 142 is exposed; and an LED light 17 is provided on the periphery of the water tray 13. The light emitted by the LED light 17 can pass through the light guide bracket 14. The light emitted by the LED light 17 will pass through the ring 142 and be emitted outward, so that a beautiful halo is formed.

The above descriptions are only the preferred embodiments of the present disclosure and are not intended to limit the present disclosure. Any modification, equivalent replacement and improvement made within the spirit and principle of the present disclosure shall be included in the protection scope of the present disclosure.

## Claims

1. A cable clip device suitable for underwater use, for clamping cable of an electrical appliance, one end of the cable is connected with a plug connector, wherein the cable clip device comprises an outer cylindrical column, a first inner cylindrical column, a second inner cylindrical column, a spring and a cover; the first inner cylindrical column and the outer cylindrical column are relatively fixed; the second inner cylindrical column vertically and telescopically slides with respect to the first inner cylindrical column; the spring provides an elastic force for the second inner cylindrical column to slide obliquely upwards; the second inner cylindrical column is provided with a sliding groove; the first inner cylindrical column and the second inner cylindrical column are connected with a pull rod arranged therebetween; a hook portion on a top of the pull rod is able to slide in the sliding groove; the sliding groove has a first positioning point and a second positioning point; the first positioning point is located below the second positioning point; the sliding groove comprises a first track and a second track connecting the first positioning point and the second positioning point; the first track and the second track are both unidirectional tracks; the hook portion is able to move from the first positioning point to the second positioning point through the first track; the hook portion is able to move from the second positioning point to the first positioning point through the second track; a middle of the cover is provided with a cable clip for clamping the cable; and the plug connector is able to pass through the first inner cylindrical column and the second inner cylindrical column; an outer periphery of the cover is provided with a sealing ring; the cover is detachably arranged above the second inner cylindrical column; when the hook portion is at the second positioning point, the sealing ring abuts against and seals an inner surface of the outer cylindrical column; and when the hook portion is at the first positioning point, an abutting and sealing state between the sealing ring and the inner surface of the outer cylindrical column is released.

2. The cable clip device suitable for underwater use according to claim 1, wherein the first track comprises a first sub-track and a second sub-track connected to the first sub-track; the first sub-track and the second sub-track only allow the hook portion to move toward the second positioning point; the first sub-track is an obliquely upward track, the second sub-track is an obliquely downward track; the second track comprises a three sub-track and a fourth sub-track connected to the third sub-track; the third sub-track and the fourth sub-track only allow the hook portion to move toward the first positioning point; a lower end of the first sub-track is connected to a lower end of the fourth sub-track, and a lower end of the second sub-track is connected to a lower end of the third sub-track.

3. The cable clip device suitable for underwater use according to claim 2, wherein a depth of an upper end of the second sub-track is smaller than a depth of an upper end of the first sub-track; and a depth of a lower end of the third sub-track is smaller than a depth of a lower end of the second sub-track; a depth of an upper end of the fourth sub-track is smaller than a depth of an upper end of the third sub-track; and a depth of a lower end of the first sub-track is smaller than a depth of a lower end of the fourth sub-track.

4. A pet water dispenser capable of quickly replacing a water pump, wherein the pet water dispenser comprises the cable clip device according to any one of claim 1 to 3, the pet water dispenser further comprises a water tank, a water pump and a water outlet column; wherein the water pump is the electrical appliance; the water pump is connected to the water outlet column in a plug-in manner; the water pump is detachably installed in the water tank; the cable clip device is installed in the water tank.

5. The pet water dispenser according to claim 4, wherein the water outlet column is vertically arranged and a water outlet of the water outlet column gradually expands outward to form a bell-shaped opening; a top of the water tank is provided with a water leakage pan; the water leakage pan has a plurality of water leakage holes; a water receiving tray is provided below the water leakage pan; the water outlet column passes through the water receiving tray; a water leakage opening is formed between the water receiving tray and the water outlet column; and an upper surface of the water receiving tray is a diversion surface with a recess in middle.

6. The pet water dispenser according to claim 5, wherein a bracket is also provided between the water receiving tray and the water leakage pan; the bracket is formed with a receiving cavity; a filter cotton and a filter activated carbon are sequentially provided in the receiving cavity from top to bottom.

7. The pet water dispenser according to claim 6, wherein the bracket is a light guide bracket; the light guide bracket comprises a ring supported on the top of the water tank; the ring is exposed; and an LED light is provided on a periphery of the water tray; a light emitted by the LED light is able to pass through the light guide bracket.
